# EUROPÄISCHE PATENTSCHRIFT

(11) **EP 2 789 568 B1**
(45) Veröffentlichungstag und Bekanntmachung des Hinweises auf die Patenterteilung: **13.07.2016**
(21) Anmeldenummer: 14161380.2
(22) Anmeldetag: 25.03.2014
(51) Int. Cl.: B66F 3/00, B66F 3/28, F16B 7/10, B66C 23/70

(54) **Hubsäule**
Lifting column
Colonne de levage

(30) Priorität: 11.04.2013 DE 102013206348
(43) Veröffentlichungstag der Anmeldung: 15.10.2014
(73) Patentinhaber: Aktiebolaget SKF, 415 50 Göteborg (SE)
(72) Erfinder: Panzer, Hans-Peter, 79540 Lörrach (DE)
(74) Vertreter: Kuhstrebe, Jochen

(56) Entgegenhaltungen:
- EP-A1- 2 372 172
- DE-U1-202012 102 704
- JP-U- H0 514 083

## Beschreibung

Ausführungsbeispiele beziehen sich auf eine Hubsäule, wie sie beispielsweise bei Behindertenstühlen, Patientenliegen, medizinischen Geräten und industriellen Anwendungen zum Einsatz kommen kann.

Hubsäulen, die auch Teleskopsäulen oder Teleskopantriebe genannt werden, werden in einer Vielzahl technischer Gebiete eingesetzt. Zu diesen zählen unter anderem Patientenliegen, Behindertenstühle aber auch andere medizinische Anwendungen. Ebenso werden sie jedoch auch außerhalb des medizinischen Sektors eingesetzt, beispielsweise um Maschinenteile oder andere Komponenten entlang einer Bewegungsrichtung verfahren zu können.

Hubsäulen umfassen so im Allgemeinen wenigstens zwei rohrförmige oder säulenförmige Komponenten, die ineinander entlang der Bewegungsrichtung einschiebbar und somit verfahrbar sind. Die betreffenden Bauteile werden hierbei häufig zur Verbesserung der mechanischen Stabilität mithilfe von Führungselementen geführt. Die Führungselemente bewirken eine lineare Lagerung der beiden Bauteile zueinander.

Häufig treten bei entsprechenden Hubsäulen exzentrische Belastungen auf, durch die beispielsweise aufgrund von Reibungskräften, jedoch auch aufgrund anderer, geometrischer Verhältnisse Verformungen der entsprechenden Bauteile zueinander entstehen können. Hierdurch können auch die zuvor genannten Führungselemente nicht nur mithilfe linearer Scherkräfte belastet werden, sondern es können ebenso Drehmomente auf diese einwirken, auf die diese häufig empfindlich reagieren. Dieses Verhalten ist häufig eher bei konstruktiv einfachen Führungselementen zu beobachten.

Die DE 196 23 580 C2 beschreibt eine Hubsäule, wie sie für Patientenliegen oder industrielle Anwendungen verwendet werden kann. Die in dem Dokument beschriebenen Hubsäulen setzen beispielsweise Führungselemente ein, die eine Führung entsprechender rohrförmiger Profile der Hubsäule ermöglichen. Diese sind mehrteilig ausgeführt, wobei die einzelnen Teile der Führungselemente aus unterschiedlichen Materialien bestehen. Die EP 2 372 172 A1 bezieht sich auf eine Vorrichtung mit mindestens zwei relativ zueinander bewegbaren Teilen, bei dem sich Stellelemente an der entsprechenden Anlageflächen abstützen. Die JP H05-14083 U bezieht sich auf einen Teleskopausleger.

Es besteht daher ein Bedarf daran, mit möglichst einfachen konstruktiven Mitteln eine lineare Führung zweier ineinander einschiebbarer Hubsäulenbauteile zu ermöglichen, die eine verbesserte Aufnahme bei Belastung auftretender Momente ermöglicht.

Diesem Bedarf trägt eine Hubsäule gemäß Patentanspruch 1 Rechnung.

Eine Hubsäule gemäß einem Ausführungsbeispiel umfasst so ein erstes und ein zweites Hubsäulenbauteil, die derart ausgebildet sind, dass diese entlang einer Bewegungsrichtung ineinander einschiebbar sind, wobei das erste und das zweite Hubsäulenbauteil jeweils eine, sich entlang der Bewegungsrichtung erstreckende Führungsfläche aufweisen, die in einem eingeschobenen Zustand einander zugewandt sind. Das erste Hubsäulenbauteil weist hierbei in der Führungsfläche eine erste und eine zweite Ausnehmung auf. Die Hubsäule umfasst ferner ein erstes und ein zweites Führungsbauteil, die jeweils eine Befestigungsstruktur und einen im Wesentlichen flächig ausgestalteten Führungsabschnitt aufweisen, wobei die Führungsbauteile derart ausgebildet sind, dass die Befestigungsstrukturen in die Ausnehmungen des ersten Hubsäulenbauteils einsetzbar sind, sodass die Führungsabschnitte an den Führungsflächen des zweiten Hubsäulenbauteils anliegen. Die Führungsbauteile und die Ausnehmungen sind hierbei derart ausgebildet und angeordnet, dass die Führungsbauteile miteinander in Kontakt stehen, wenn die Befestigungsstrukturen in die Ausnehmungen eingebracht sind.

Einer Hubsäule gemäß einem Ausführungsbeispiel liegt so die Erkenntnis zugrunde, dass eine entsprechende lineare Führung der Hubsäulenbauteile mit möglichst einfach konstruktiven Mitteln, die trotzdem eine verbesserte Aufnahme bei Belastung auftretender Momente ermöglicht, realisiert werden kann, indem zwei Führungsbauteile vorgesehen werden, die sich im eingebauten Zustand aneinander abstützen, wenn entsprechende Momente bzw. Drehmomente auftreten. Zu diesem Zweck wird anstelle einer einzelnen Ausnehmung in die Führungsfläche des ersten Hubsäulenbauteils eine Zweite eingebracht, in die das zweite Führungsbauteil mit seiner Befestigungsstruktur eingebracht werden kann. Das erste Führungsbauteil kann hierbei über seine Befestigungsstruktur in die zweite Ausnehmung eingebracht und derart mit dem ersten Hubsäulenbauteil mechanisch verbunden werden. Sind so beide Führungsbauteile mit dem ersten Hubsäulenbauteil mechanisch verbunden, kann ein auf eines der Führungsbauteile einwirkendes Moment über den Kontakt zu dem jeweils anderen Führungsbauteil dieses abgegeben werden. Hierdurch kann also eine Verteilung eines in das Führungsbauteil eingeleiteten Moments auf die Befestigungsstrukturen beider Führungsbauteile ermöglicht werden.

Durch die entsprechende Verteilung der eingeleiteten Momente auf beide Befestigungsstrukturen der beiden Führungsbauteile kann so eine Gefahr eines Abscherens der Befestigungsstruktur von dem Führungsabschnitt eines Führungsbauteils reduziert werden. Dies kann beispielsweise schon deshalb möglich sein, da einem auf eines der beiden Führungsbauteile einwirkenden Drehmoment häufig kein korrespondierendes, gegebenenfalls ein betragsmäßig deutlich geringeres Drehmoment gegenübersteht. Hierdurch kann in diesen Betriebssituationen also eine Verteilung der Drehmomente auf die beiden Befestigungsstrukturen ermöglicht werden. Die Verteilung der Drehmomente kann hierbei von den genauen Betriebssituationen und Betriebsbedingungen, denen die Hubsäule unterworfen ist, abhängen. Eine identische Aufteilung der Drehmomente stellt hierbei einen eher seltenen Fall dar.

Das erste und/oder das zweite Hubsäulenbauteil können hierbei als Hohlprofil ausgeführt sein. Die Hubsäulenbauteile können hierbei senkrecht zu ihrer Bewegungsrichtung einen von einer Kreisform abweichenden Querschnitt aufweisen, der beispielsweise polygonal, also beispielsweise quadratisch oder rechteckig, ausgestaltet sein kann. Selbstverständlich können die Hubsäulenbauteile senkrecht zu der Bewegungsrichtung auch andere Querschnittsformen, beispielsweise eine hexagonale oder oktagonale Querschnittsform aufweisen.

Bei einer Hubsäule gemäß einem Ausführungsbeispiel können die Führungsbauteile derart ausgebildet sein, dass diese miteinander entlang einer Linie in Kontakt stehen. Die Führungsbauteile können so also einen linienförmigen Kontakt zueinander aufweisen, wodurch es gegebenenfalls möglich ist, größere Kräfte bzw. größere Momente zwischen den beiden Führungsbauteilen verteilen zu können. Hierdurch kann gegebenenfalls eine weitere Verbesserung der Möglichkeit der Aufnahme entsprechender Momente erzielt werden.

Die Linie verläuft hierbei häufig im Wesentlichen senkrecht zu der Bewegungsrichtung, jedoch parallel zu den Ausrichtungen der Führungsflächen. Hierdurch kann gegebenenfalls eine zusätzliche Belastung der Befestigungsstrukturen aufgrund schräg zu der Bewegungsrichtung eingeleiteter Kräfte oder Momente reduziert werden.

Bei einer Hubsäule gemäß einem Ausführungsbeispiel können das erste und das zweite Hubsäulenbauteil derart ausgestaltet sein, dass die Führungsabschnitte der Führungsbauteile parallel zu den Führungsflächen keinen formschlüssigen Kontakt zu dem ersten und/oder dem zweiten Hubsäulenbauteil aufweisen. Anders ausgedrückt können das erste und das zweite Hubsäulenbauteil derart ausgestaltet sein, dass die Führungsabschnitte der Führungsbauteile bezüglich aller Richtungen parallel zu den Führungsflächen der beiden Hubsäulenbauteile mit dem ersten und/oder dem zweiten Hubsäulenbauteil nicht in Kontakt stehen, also kontaktfrei sind. Senkrecht zu der Führungsfläche stehen diese jedoch zumindest mit dem zweiten Hubsäulenbauteil in Kontakt, um die Führung zu bewirken. Je nach konkreter Ausgestaltung kann dies auch ein Anliegen an dem zweiten Hubsäulenbauteil an der Führungsfläche, also senkrecht zu der Führungsfläche, ratsam machen.

Gerade in einem solchen Fall kann eine zusätzliche Abstützung der Führungsbauteile zueinander von Vorteil sein, da sich diese gerade nicht mit den Führungsabschnitten an den Hubsäulenbauteilen abstützen können. Die Kräfte bzw. Momente werden hierbei über die Führungsabschnitte in die Führungsbauteile eingeleitet. Insbesondere kann in einem solchen Fall gegebenenfalls eine aufwendige Anpassung der Hubsäulenbauteile entfallen, die aufgrund der typischerweise höheren mechanischen Anforderungen auch einen höheren Aufwand hinsichtlich ihrer Formgebung erfordern. Anders ausgedrückt kann gerade in einem solchen Fall gegebenenfalls eine Konstruktion einer Hubsäule vereinfacht werden.

Die erste und/oder die zweite Ausnehmung kann beispielsweise durch eine Bohrung, ein Loch, ein Sackloch oder eine andere Vertiefung gebildet sein, die beispielsweise eine Wand des Hubsäulenbauteils vollständig oder zumindest teilweise durchdringt. Sie kann jedoch gegebenenfalls auch derart ausgeführt sein, dass lediglich eine Reduzierung einer Materialdicke der Wand im Bereich der Ausnehmungen vorliegt.

Bei einer Hubsäule gemäß einem Ausführungsbeispiel können die Führungsflächen des ersten und des zweiten Hubsäulenbauteils in Form eines ebenen Abschnitts und die Führungsabschnitte im Wesentlichen plattenförmig ausgestaltet sein. Hierbei wird unter einem plattenförmig ausgestalteten Bauteil ein solches verstanden, welches entlang einer bestimmten Richtung durch zwei parallel versetzte, plane und im Wesentlichen senkrecht zu der vorgenannten Richtung ausgerichteten ebenen Abschnitten begrenzt wird. Die genaue Form der ebenen Abschnitte senkrecht zu der vorgenannten Richtung ist hierbei unerheblich. Diese können beispielsweise rund, eckig oder in einer anderen Form ausgestaltet sein.

Gerade wenn aufgrund gegebenenfalls betriebsbedingter, konstruktionsbedingter oder aufgrund anderer Randbedingungen eine Ausgestaltung der Hubsäulenbauteile mit Führungsflächen in Form eines ebenen Abschnitts notwendig oder ratsam ist, kann so gegebenenfalls eine Gefahr einer Einleitung größerer Drehmomente in die Führungsbauteile steigen. In einem solchen Fall kann daher gegebenenfalls der Einsatz einer Hubsäule gemäß einem Ausführungsbeispiel eine verbesserte Aufnahme von gegebenenfalls auftretenden Momenten ermöglichen.

Bei einer solchen Hubsäule gemäß einem Ausführungsbeispiel können die Führungsabschnitte der Führungsbauteile sich höchstens 80 % entlang einer Breite der Führungsfläche des ersten Hubsäulenbauteils entlang einer senkrecht zu der Bewegungsrichtung stehenden Umfangsrichtung des ersten Hubsäulenbauteils erstrecken. So können gerade bei vergleichsweise flächenmäßig kleinen Führungsbauteilen, die sich gerade nicht vollständig über eine Breite der Führungsflächen erstrecken, entsprechende Drehmomente verstärkt auftreten. So können gegebenenfalls konstruktive Randbedingungen oder Betriebsbedingungen der Hubsäule besser berücksichtigt werden, ohne eine mechanische Stabilität und Betriebssicherheit der Hubsäule durch einen Ausfall der Führungsbauteile signifikant zu verschlechtern. Alternativ oder ergänzend kann es gegebenenfalls auch möglich sein, identische Führungsbauteile für unterschiedliche Serien von Hubsäulen bzw. unterschiedliche Modelle von Hubsäulen oder solche einzusetzen, die an unterschiedlichen Stellen einer Hubsäule gemäß einem Ausführungsbeispiel zum Einsatz kommen.

Bei einer solchen Hubsäule gemäß einem Ausführungsbeispiel kann die Befestigungsstruktur zu einem geometrischen Mittelpunkt des Führungsabschnitts versetzt angeordnet sein.

So kann gerade bei einer entsprechenden exzentrischen Anordnung der Befestigungsstruktur zu dem Führungsabschnitt eine Einleitung von Drehmomenten nachteilig beeinflusst werden, die jedoch aufgrund anderer Randbedingungen nicht durch eine Anpassung der entsprechenden Führungsbauteile kompensierbar ist. Bei diesen Randbedingungen können sowohl konstruktionsbedingte, wie auch andere Randbedingungen im Vordergrund stehen. Hierdurch kann gegebenenfalls eine Herstellung einer solchen Hubsäule vereinfacht werden.

Bei einer Hubsäule gemäß einem Ausführungsbeispiel können die Befestigungsstrukturen der Führungsbauteile und die Ausnehmungen des ersten Hubsäulenbauteils derart ausgebildet, dass die Führungsbauteile durch das Einsetzen der Befestigungsstrukturen in die Ausnehmungen des ersten Hubsäulenbauteils drehfest mit diesen verbunden sind. Gerade hierdurch kann eine Belastung der Befestigungsstrukturen der beiden Führungsbauteile entstehen. Andererseits kann die Implementierung einer entsprechenden drehfesten Verbindung zwischen dem Führungsbauteil und dem ersten Hubsäulenbauteil aufgrund konzeptioneller oder konstruktiver Bedingungen notwendig oder ratsam sein. Das heißt, gerade in einer solchen Situation kann der Einsatz einer Hubsäule gemäß einem Ausführungsbeispiel vorteilhaft sein.

So können die Befestigungsstrukturen des ersten und/oder des zweiten Führungsbauteils sowie die erste und/oder die zweite Ausnehmungen beispielsweise nicht vollständig rotationssymmetrisch sein. Eine solche Komponente kann jedoch beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist, und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig wenigstens im Wesentlichen in sich selbst über, wird also im mathematischen Sinn auf sich selbst abgebildet. Ebenso können die Befestigungsstrukturen sowie die Ausnehmungen gegebenenfalls asymmetrisch ausgeführt sein.

Bei einer Hubsäule gemäß einem Ausführungsbeispiel können die Führungsbauteile entlang der Bewegungsrichtung zumindest teilweise hintereinander angeordnet sein. Anders ausgedrückt können diese entlang der Bewegungsrichtung derart zueinander versetzt angeordnet sein, dass die Führungsbauteile miteinander entlang der Bewegungsrichtung in Kontakt stehen. Da die Hubsäulenbauteile gerade entlang der Bewegungsrichtung ineinander verschiebbar sind, kann diese Anordnung der Führungsbauteile gegebenenfalls ohne einen zusätzlichen Bauraumbedarf implementiert werden. Es kann so gegebenenfalls eine kompakte Lösung implementiert werden.

Bei einer Hubsäule gemäß einem Ausführungsbeispiel können die Führungsbauteile aus einem Polymer, beispielsweise einem spritzgießfähigen Polymer, gefertigt sein. Alternativ oder ergänzend können die Führungsbauteile auch einstückig ausgeführt sein. So können die Führungsbauteile bei einem Ausführungsbeispiel gegebenenfalls durch ein kostengünstiges Verfahren hergestellt werden, sodass die Hubsäule mit konstruktiv einfachen Mitteln implementierbar ist. Als spritzgießfähiges Polymer kann beispielsweise Polyoxymethylen (POM) verwendet werden. Es können jedoch auch andere Polymere, beispielsweise Polytetrafluorethylen (PTFE) zum Einsatz kommen. Im Falle der Verwendung eines spritzgießfähigen Polymers, jedoch auch im Falle der Verwendung eines anderen Polymers oder eines anderen Materials, können die Führungsbauteile einstückig ausgeführt werden. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Bei einer Hubsäule gemäß einem Ausführungsbeispiel können das erste und das zweite Führungsbauteil identisch ausgeführt sein. Anders ausgedrückt kann es sich bei einem Ausführungsbeispiel einer Hubsäule bei den Führungsbauteilen um gleichartige, identisch hergestellte Bauteile handeln. Hierdurch ist es also möglich, eine Anzahl verschiedener Teile zur Herstellung einer Hubsäule gemäß einem Ausführungsbeispiel zu reduzieren und so eine Konstruktion einer solchen Hubsäule weiter zu vereinfachen.

Bei einer Hubsäule gemäß einem Ausführungsbeispiel können das erste Führungsbauteil und/oder das zweite Führungsbauteil darüber hinaus ausgebildet sein, um als Schmiermittelreservoir zu dienen. Zu diesem Zweck können die Führungsabschnitte des ersten und/oder des zweiten Führungsbauteils beispielsweise an einer im montierten Zustand der Führungsfläche des zweiten Hubsäulenbauteils zugewandte Schmiermitteltaschen aufweisen, die ausgebildet sind, um mit einem Schmierstoff, beispielsweise einem Fett, befüllt oder befüllbar zu sein. Als Schmiermittel kann hierbei beispielsweise ein Fett oder ein anderer entsprechend viskoser Stoff mit entsprechenden Schmiereigenschaften eingesetzt werden. Die Begriffe Schmierstoff und Schmiermittel können hierbei synonym verwendet werden.

Bei einer Hubsäule gemäß einem Ausführungsbeispiel kann das erste Hubsäulenbauteil sowie das erste und/oder das zweite Führungsbauteil derart ausgebildet sein, sodass diese jeweils eine Steckverbindung ausbilden. Hierdurch kann gegebenenfalls eine Montage der Führungsbauteile an dem ersten Hubsäulenbauteil vereinfacht werden.

Selbstverständlich kann bei einer Hubsäule gemäß einem Ausführungsbeispiel auch das zweite Hubsäulenbauteil in seiner Führungsfläche eine erste und gegebenenfalls eine zweite Ausnehmung aufweisen, die ebenso ausgebildet sind, sodass entsprechend in diese ein drittes und gegebenenfalls ein viertes Führungsbauteil einsetzbar sind, wie dies zuvor beschrieben wurde. Die Führungsabschnitte des dritten und gegebenenfalls vierten Führungsbauteils können dann der Führungsfläche des ersten Hubsäulenbauteils zugewandt sein und im eingebauten Zustand an diesen anliegen. Sind sowohl das dritte wie auch das vierte Führungsbauteil vorgesehen, können diese derart angeordnet sein, dass auch diese miteinander in Kontakt stehen, wenn ihre Befestigungsstrukturen in die erste und zweite Ausnehmung des zweiten Hubsäulenbauteils eingebracht sind.

Die ersten und zweiten Ausnehmungen in der Führungsfläche des ersten Hubsäulenbauteils und die ersten und zweiten Ausnehmungen in der Führungsfläche des zweiten Hubsäulenbauteils können hierbei entlang der Bewegungsrichtung an einander abgewandten Seiten angeordnet sein. Hierdurch kann eine entsprechende Führung der beiden Hubsäulenbauteile zueinander gegebenenfalls unabhängig von einem Einschubzustand der beiden Hubsäulenbauteile zueinander realisiert werden.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Nachfolgend werden unter Bezugnahme auf die beigefügten Figuren Ausführungsbeispiele näher beschrieben und erläutert.
Fig. 1 zeigt eine Hubsäule gemäß einem Ausführungsbeispiel in einem eingeschobenen bzw. zusammengefahrenen Zustand;
Fig. 2 zeigt die in Fig. 1 gezeigte Hubsäule gemäß einem Ausführungsbeispiel in einem auseinandergefahrenen bzw. auseinandergeschobenen Zustand;
Fig. 3 zeigt eine Teilexplosionsdarstellung der Hubsäule aus den Fig. 1 und 2 in einem Bereich mit einer einzelnen weiteren Ausnehmung und einem einzelnen Führungsbauteil;
Fig. 4 zeigt den in Fig. 3 gezeigten Bereich der Hubsäule, bei der das Führungsbauteil in die entsprechende weitere Ausnehmung eingesetzt ist; und
Fig. 5 zeigt das erste Hubsäulenbauteil der Hubsäule gemäß einem Ausführungsbeispiel in einem Bereich mit zwei miteinander in Kontakt stehenden Führungsbauteilen.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

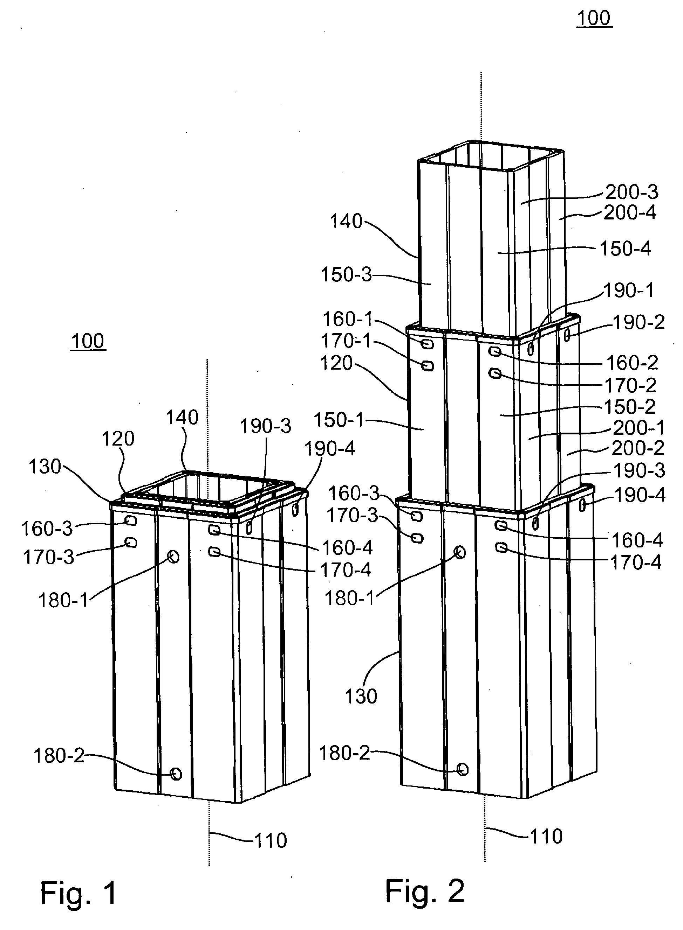

Fig. 1 zeigt eine Hubsäule 100 gemäß einem Ausführungsbeispiel in einem eingeschobenen Zustand. Fig. 2 zeigt entsprechend die in Fig. 1 dargestellte Hubsäule 100 gemäß einem Ausführungsbeispiel, die in einem nicht eingeschobenen bzw. eingefahrenen Zustand ist.

Die Hubsäule 100 weist hierbei drei Hubsäulenbauteile 100 auf, die entlang einer Bewegungsrichtung 110 ineinander verschiebbar sind. Die Bewegungsrichtung 110 ist hierbei in den Fig. 1 und 2 als punktierte Linie dargestellt und erstreckt sich im Wesentlichen parallel zu einer Erstreckungsrichtung der drei Hubsäulenbauteile.

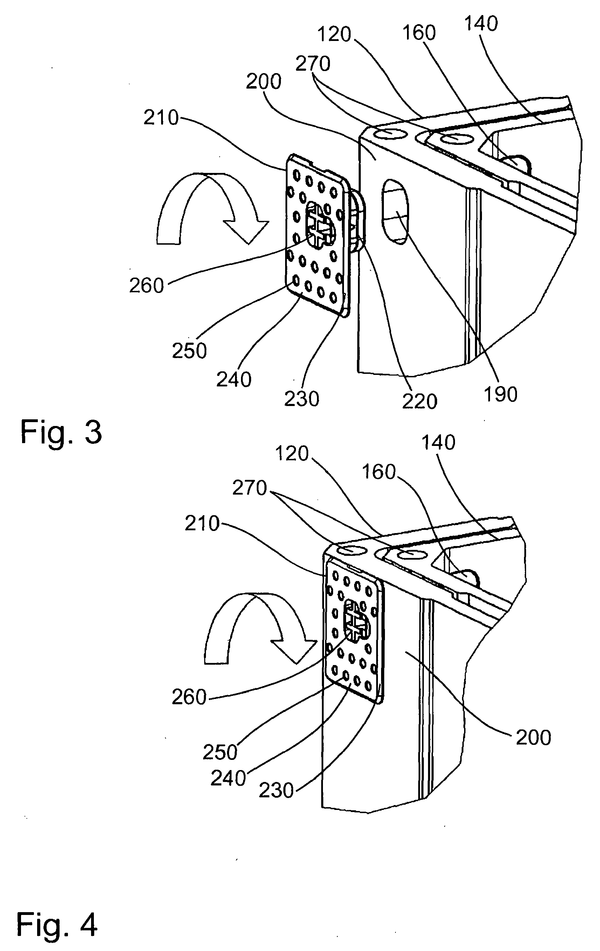

Die Hubsäule 100 umfasst hierbei ein erstes Hubsäulenbauteil 120, welches das mittlere der drei Hubsäulenbauteile der Hubsäule 100 darstellt. Entsprechend weist die Hubsäule 100 ein ausgehend von der Bewegungsrichtung 110 außerhalb des ersten Hubsäulenbauteils 120 liegendes zweites Hubsäulenbauteil 130 auf, sowie ein innerhalb des ersten Hubsäulenbauteils 120 angeordnetes drittes Hubsäulenbauteil 140. Die Hubsäulenbauteile 120, 130, 140 sind hierbei als Hubsäulenprofile bzw. Rohrprofile ausgebildet, die teleskopartig ineinandergreifen. Sie weisen eine von der Kreisform abweichenden Querschnitt senkrecht zu der Bewegungsrichtung 110 auf, der im vorliegenden Fall im Wesentlichen quadratisch ist. Genauer gesagt handelt es sich bei den Hubsäulenbauteilen 120, 130, 140 um solche, bei denen eine Querschnittsfläche senkrecht zu der Bewegungsrichtung 110 im Wesentlichen polygonal ausgestaltet ist. Wie insbesondere im Zusammenhang mit den Fig. 3 bis 5 noch näher illustriert wird, weisen die Profile hierbei unterschiedliche Wandstärken auf.

Das erste Hubsäulenbauteil 120 weist hierbei mehrere Führungsflächen 150-1, 150-2 auf. Ebenso weist auch das zweite Hubsäulenbauteil 130 entsprechende Führungsflächen 150 auf, die jedoch bei den in den Fig. 1 und 2 gewählten Darstellungen von dem zweiten Hubsäulenbauteil 130 selbst verdeckt sind. So liegen die Führungsflächen 150 des zweiten Hubsäulenbauteils in einem eingeschobenen bzw. eingefahrenen Zustand, wie er in Fig. 1 gezeigt ist, den Führungsflächen 150-1 und 150-2 gegenüber.

Ebenso weist das dritte Hubsäulenbauteil 140 zwei Führungsflächen 150-3 und 150-4 auf, denen entsprechende weitere Führungsflächen des ersten Hubsäulenbauteils 120 im eingefahrenen Zustand gegenüberliegen. Auch diese sind jedoch in den in den Fig. 1 und 2 gezeigten Darstellungen nicht erkennbar, da diese von dem ersten Hubsäulenbauteil 120 verdeckt werden.

Die Führungsflächen 150 erstrecken sich hierbei entlang der Bewegungsrichtung 110 im Wesentlichen vollständig über die Höhe der betreffenden Hubsäulenbauteile 120, 130, 140. Diese können bei anderen Ausführungsbeispielen einer Hubsäule 100 selbstverständlich auch mit einer geringeren Höhe ausgeführt werden.

In den Führungsflächen 150 des ersten, zweiten und dritten Hubsäulenbauteils 120, 130, 140 sind jeweils wenigstens eine erste Ausnehmung und jeweils wenigstens eine zweite Ausnehmung 170 implementiert, von denen aufgrund der bereits zuvor erwähnten Darstellung in den Fig. 1 und 2 nicht alle erkennbar sind. So weist das erste Hubsäulenbauteil 120 in den in den Fig. 1 und 2 nicht erkennbaren Führungsflächen 150, die dem dritten Hubsäulenbauteil 140 und seinen Führungsflächen 150-3, 150-4 zugewandt sind, zwei erste Ausnehmungen 160-1, 160-2 auf sowie zwei zweite Ausnehmungen 170-1, 170-2. Die beiden ersten Ausnehmungen 160 sind hierbei bezogen auf die jeweiligen zweiten Ausnehmungen 170 entlang der Bewegungsrichtung 110 näher an einem äußeren Ende des betreffenden Hubsäulenbauteils 120 angeordnet. Unabhängig davon sind jedoch jeweils zwei erste und zweite Ausnehmungen 160, 170 entlang der Bewegungsrichtung 110 angeordnet.

Darüber hinaus sind in den Fig. 1 und 2 zwei weitere erste Ausnehmungen 160-3, 160-4 sowie weitere zwei zweite Ausnehmungen 170-3, 170-4 dargestellt. Diese sind in den ebenfalls in Fig. 1 und 2 nicht erkennbaren Führungsflächen des zweiten Hubsäulenbauteils 130 vorgesehen und angeordnet. Auch hier sind die jeweiligen ersten Ausnehmungen 160 bezogen auf die zweiten Ausnehmungen 170 entlang der Bewegungsrichtung 110 an einem dem betreffenden Ende des Hubsäulenbauteils näheren Ende angeordnet.

Aber auch die Führungsflächen 150-1,..., 150-4, wie sie insbesondere in Fig. 2 eingezeichnet sind, weisen entsprechende erste und zweite Ausnehmungen 160, 170 auf, die jedoch aufgrund der in den Fig. 1 und 2 gewählten Darstellungen nicht sichtbar sind.

Die ersten und zweiten Ausnehmungen 160, 170 sind hierbei in Form von Löchern mit einer im Wesentlichen rechteckigen Querschnittsform ausgeführt, die das Material der betreffenden Hubsäulenbauteile 120, 130, 140 vollständig durchdringen. Die Ecken der im Wesentlichen rechteckigen Löcher sind hierbei abgerundet. Hierdurch kann, wie insbesondere im Zusammenhang mit den Fig. 3 bis 5 noch näher erläutert wird, aufgrund der fehlenden vollständigen Rotationssymmetrie ausgebildet und in der Lage, ein Drehmoment an das betreffende Hubsäulenbauteil 120, 130, 140 zu übertragen.

Selbstverständlich können bei anderen Ausführungsbeispielen auch andere Formen von Ausnehmungen 160, 170 realisiert werden, bei denen es sich beispielsweise lediglich um eine Vertiefung, bei der also das Material der betreffenden Hubsäulenbauteile 120, 130, 140 nicht vollständig durchbrochen ist. Ebenso können die ersten und zweiten Ausnehmungen 160, 170 beispielsweise auch als Sacklöcher, beispielsweise als Gewindesacklöcher, ausgeführt sein.

Die Ausgestaltung der Ausnehmungen 160, 170 als im Wesentlichen rechteckige Löcher mit abgerundeten Ecken ermöglicht, wie im Nachfolgenden noch dargestellt wird, den Einsatz von Führungsbauteilen, die über eine Steckverbindung mit den entsprechenden Hubsäulenbauteilen 120, 130, 140 verbindbar sind. Hierdurch kann eine schnelle und unkomplizierte Montage der betreffenden Führungsbauteile ermöglicht werden. Bei dem hier gezeigten Ausführungsbeispiel einer Hubsäule 100 sind die ersten und zweiten Ausnehmungen 160, 170 im Wesentlichen identisch ausgeführt.

Das zweite Hubsäulenbauteil 130 weist darüber hinaus zwei weitere Bohrungen 180-1, 180-2 auf, mit deren Hilfe das zweite Hubsäulenbauteil 130 beispielsweise mit einer anderen Komponente mechanisch verbindbar ist.

Darüber hinaus weist die Hubsäule 100 ebenso weitere Ausnehmungen 190 auf, die entlang einer Umfangsrichtung der betreffenden Hubsäulenbauteile 120, 130, 140 jeweils im Wesentlichen auf Höhe der ersten Ausnehmungen 160 angeordnet sind. So weist das erste Hubsäulenbauteil zwei in Fig. 2 dargestellte weitere Ausnehmungen 190-1 und 190-2 auf, während das zweite Hubsäulenbauteil 130 ebenso zwei in den Fig. 1 und 2 dargestellte weitere Ausnehmungen 190-3, 190-4 umfasst. Die weiteren Ausnehmungen 190 sind in weiteren Führungsflächen 200 angeordnet, die ebenso in den Fig. 1 und 2 nicht erkennbar sind. Allerdings sind die entsprechenden, den nicht gezeigten weiteren Führungsflächen 200 gegenüberliegenden weiteren Führungsflächen dargestellt, wie dies auch im Zusammenhang mit den Führungsflächen 150 geschehen ist. So weist das erste Hubsäulenbauteil 120 zwei weitere Führungsflächen 200-1, 200-2 auf, die in dem in Fig. 1 dargestellten, eingeschobenen Zustand der Hubsäule 100 den weiteren Ausnehmungen 190-3, 190-4 gegenüberliegen. Entsprechend weist auch das dritte Hubsäulenbauteil 140 zwei weitere Führungsflächen 200-3, 200-4 auf, die entsprechend im Hinblick auf die weiteren Ausnehmungen 190-1, 190-2 angeordnet sind.

Die weiteren Ausnehmungen 190 können hierbei im Wesentlichen identisch zu den ersten oder zweiten Ausnehmungen 160, 170 ausgeführt sein, jedoch auch von diesen unterschiedlich implementiert sein. So sind bei dem in den Fig. 1 und 2 gezeigten Ausführungsbeispiel einer Hubsäule 100 die weiteren Ausnehmungen 190 hinsichtlich ihrer geometrischen Form identisch zu den ersten und zweiten Ausnehmungen 160, 170, jedoch um 90° gedreht.

Fig. 3 zeigt eine Teilexplosionsdarstellung des ersten und des dritten Hubsäulenbauteils 120, 140, wobei der in Fig. 3 dargestellte Bereich in den Fig. 1 und 2 von dem zweiten Hubsäulenbauteil 130 verdeckt wurde. Die Darstellung der Fig. 3 ist daher gegenüber der in den Fig. 1 und 2 um 180° gedreht. Entsprechend zeigt Fig. 4 eine perspektivische Darstellung des in Fig. 3 gezeigten Ausschnitts.

Die Fig. 3 und 4 zeigen so eine weitere Ausnehmung 190, die in einer weiteren Führungsfläche 200 des ersten Hubsäulenbauteils 120 eingebracht ist. Wie bereits zuvor erläutert würde, ist die weitere Ausnehmung 190 hierbei im Wesentlichen rechteckig ausgeführt, bei der jedoch die Ecken abgerundet sind. Insbesondere weist die weitere Ausnehmung 190 eine nicht vollständig rotationssyminetrische Form auf, sodass über die weitere Ausnehmung 190 ein Drehmoment auf das erste Hubsäulenbauteil 120 übertragbar ist. Allerdings weist die weitere Ausnehmung 190 eine 2-zählige Symmetrie auf, sodass bei einer Drehung der weiteren Ausnehmung 190 um 180° (= 360° / 2) diese wieder in sich selbst übergeht.

Darüber hinaus zeigt Fig. 3 ein zu der weiteren Ausnehmung 190 versetzt eingezeichnetes Führungsbauteil 210, welches eine Befestigungsstruktur 220 und einen Führungsabschnitt 230 aufweist. Die Befestigungsstruktur 220 ist hierbei derart ausgebildet, dass diese in die weitere Ausnehmung 190 und - aufgrund der identischen Ausführung der weiteren Ausnehmungen 190, der ersten Ausnehmungen 160 und der zweiten Ausnehmungen 170 - auch in die ersten und zweiten Ausnehmungen 160, 170 einführbar ist. Hierdurch kann das Führungsbauteil 210 mechanisch drehfest mit dem betreffenden Hubsäulenbauteil, also im vorliegenden Fall mit dem ersten Hubsäulenbauteil 120, verbunden werden. Die Befestigungsstruktur 220 schafft hierbei eine formschlüssige Verbindung des Führungsbauteils 210 und des ersten Hubsäulenbauteils 120 bezüglich Drehungen um die weitere Ausnehmung 190.

Die Befestigungsstruktur 220 und die weitere Ausnehmung 190 bzw. die entsprechenden ersten und zweiten Ausnehmungen 160, 170 bilden hierbei eine Steckverbindung, die eine einfache und schnelle Montage der Führungsbauteile 210 ermöglicht. Hierdurch können diese einfach an die entsprechenden Hubsäulenbauteile 120, 130, 140 angebracht werden.

Das Führungsbauteil 210 weist ferner den bereits zuvor erwähnten Führungsabschnitt 230 auf, der flächig ausgestaltet ist. Genauer gesagt handelt es sich bei dem Führungsabschnitt 230 um einen im Wesentlichen plattenförmig ausgestalteten Abschnitt des Führungsbauteils 210, der durch zwei im Wesentlichen planparallele Oberflächen begrenzt wird. Eine der beiden Oberflächen bildet hierbei eine Gleitfläche 240, mit der der Führungsabschnitt 230 des Führungsbauteils 210 mit einer entsprechenden Führungsfläche, beispielsweise der weiteren Führungsfläche 200 des in Fig. 3 und 4 nicht gezeigten zweiten Hubsäulenbauteils in Kontakt steht. Die Gleitfläche 240 weist hierbei eine Mehrzahl von Vertiefungen, die Schmiermitteltaschen 250 darstellen, auf, die derart ausgebildet sind, dass diese mit einem Schmiermittel oder einem Schmierstoff befüllbar oder befüllt sind. Sind die Schmiermitteltaschen 250 so mit einem Schmiermittel, beispielsweise einem Fett, befüllt, kann so eine Lebenszeitschmierung (For-Life-Schmierung) der Linearführung realisiert werden, die durch das Führungsbauteil 210 und die entsprechende Führungsfläche 200 gebildet wird. Selbstverständlich kann bei anderen Ausführungsbeispielen auch eine Nachschmierung, beispielsweise im Rahmen einer Wartung der Hubsäule 100, ermöglicht werden.

Die Befestigungsstruktur 220 ist hierbei mit dem Führungsabschnitt 230 des Führungsbauteils 210 über eine im Wesentlichen stegförmig ausgebildete Verbindungsstruktur 260 gebildet. Treten so Kräfte parallel zu der Gleitfläche 240 auf, werden diese über die Verbindungsstruktur 260 und die Befestigungsstruktur 220 und die weitere Ausnehmung 190 bzw. die entsprechenden ersten und zweiten Ausnehmungen 160, 170 an das betreffende Hubsäulenbauteil (hier das erste Hubsäulenbauteil 120) abgegeben. Die hier gezeigte stegförmige Ausgestaltung der Verbindungsstruktur 260 kann beispielsweise fertigungstechnisch vorteilhaft sein, da hierdurch gegebenenfalls eine verbesserte mechanische Stabilität erzielbar ist, wobei das Führungsbauteil 210 dennoch im Rahmen eines Spritzgießverfahrens herstellbar ist.

Das Führungsbauteil 210 ist hierbei als einstückig ausgebildetes Führungsbauteil implementiert. Es handelt sich um aus einem spritzgießfähigen Polymer hergestelltes Bauteil, welches einerseits mit dem Material der Führungsfläche 150 bzw. den weiteren Führungsflächen 200 einerseits eine lineare Führung ermöglicht, ohne jedoch einen zu hohen Reibwiderstand zu bewirken. Darüber hinaus sollte das betreffende Material derart ausgewählt sein, dass dieses eine ausreichende mechanische Stabilität ermöglicht.

So kann das Führungsbauteil 210 beispielsweise im Rahmen eines Spritzgussverfahrens aus Polyoxymethylen (POM) oder einem vergleichbaren Thermoplast hergestellt werden. Ebenso kann gegebenenfalls auch Polytetrafluorethylen (PTFE) verwendet werden. Allerdings ist Polytetrafluorethylen nur bedingt spritzgießtauglich, weshalb gegebenenfalls ein anderes Herstellungsverfahren, beispielsweise ein spanabhebendes Verfahren, für das Führungsbauteil 210 in einem solchen Fall angewendet werden sollte.

Darüber hinaus zeigen die Fig. 3 und 4 ebenso eine erste Ausnehmung 160 des dritten Hubsäulenbauteils 140 sowie zwei Bohrungen 270 zur Montage weiterer Komponenten an die Hubsäule 100 gemäß einem Ausführungsbeispiel.

Aufgrund der über den Führungsabschnitt 230 hinausstehenden Befestigungsstruktur 220 werden die Führungsbauteile 210 auch als Gleitpilze bezeichnet. Die Führungsbauteile 210 können gegebenenfalls bei hohen Belastungen, wie sie beispielsweise im Falle exzentrischer Belastungen der Hubsäulenbauteile 120, 130, 140 auftreten können, aufgrund von ungleichmäßig auftretenden Reibkräften einem Drehmoment ausgesetzt werden, wie dies durch die Pfeile in den Fig. 3 und 4 angedeutet ist. Entsprechende Drehmomente und damit zusammenhängende exzentrische Belastungen können beispielsweise bei konkaven oder konvexen Profilrohren auftreten, wenn diese abschnittsweise oder vollständig als Hubsäulenbauteile 120, 130, 140 eingesetzt werden. Während die Verbindungsstrukturen 260 im Allgemeinen gut lineare Scherkräfte an die entsprechenden Ausnehmungen 160, 170, 190 übertragen können, kann jedoch das Auftreten eines Drehmoments bereits bei kleineren Belastungen zu einer Zerstörung oder Beschädigung des Führungsbauteils 210 dadurch führen, dass die Befestigungsstruktur 220 von dem Führungsabschnitt 230 abgedreht bzw. abgeschert wird. Anders ausgedrückt können die Gleitpilze aufgrund eines zu hohen Drehmoments zerstört werden, wobei die entsprechende Zerstörung beispielsweise in Form eines Scherbruchs der auch als Befestigungszapfen bezeichneten Befestigungsstruktur 220 am Gleitpilz 210 auftreten kann. Dies führt im Allgemeinen zum Verlust der Funktion des betreffenden Führungsbauteils. Die lineare Führung der Hubsäulenbauteile zueinander kann daher gegebenenfalls zusammenbrechen.

Dies kann beispielsweise dann passieren, wenn der Führungsabschnitt 230 keine formschlüssige Verbindung zu dem betreffenden Hubsäulenbauteil 120 in einer Richtung aufbauen kann, die parallel zu der Führungsfläche 200 liegt. So liegt, wie dies insbesondere auch Fig. 4 zeigt, der Führungsabschnitt 230 auf der Führungsfläche 200 flächenmäßig an. Lediglich über die Befestigungsstruktur 220 wird hier eine formschlüssige, drehfeste Verbindung des Führungsbauteils 210 zu dem Hubsäulenbauteil 120 realisiert.

Erschwerend kann in einem solchen Fall hinzutreten, dass die Befestigungsstruktur 220 gegebenenfalls exzentrisch bezogen auf den Führungsabschnitt 230 angebracht ist. Dies kann beispielsweise aus konstruktiven, jedoch auch aus anderen Gründen notwendig oder ratsam sein. Im vorliegenden Fall ist die Befestigungsstruktur 220 bzw. die Verbindungsstruktur 260 nicht vollständig mittig an dem Führungsabschnitt 230 befestigt.

Die in den Fig. 3 und 4 dargestellte Form der Führung stellt zwar eine mit konstruktiv einfachen Mitteln realisierte lineare Führung einer entsprechenden Hubsäule 100 dar, die jedoch aufgrund der zuvor beschriebenen Problematik nur bedingt geeignet ist, Drehmomente aufzunehmen. Diese in den Fig. 3 und 4 dargestellte Form der Führung durch einzelne Gleitpilze (Führungsbauteile 210) stellt so eine konventionelle Lösung dar, wie sie bei Hubsäulenprofilen bisher verwendet wurde. Diese kann ergänzend auch im Rahmen einer Hubsäule 100 gemäß einem Ausführungsbeispiel implementiert werden, wie dies die Fig. 1 bis 4 erläutert haben.

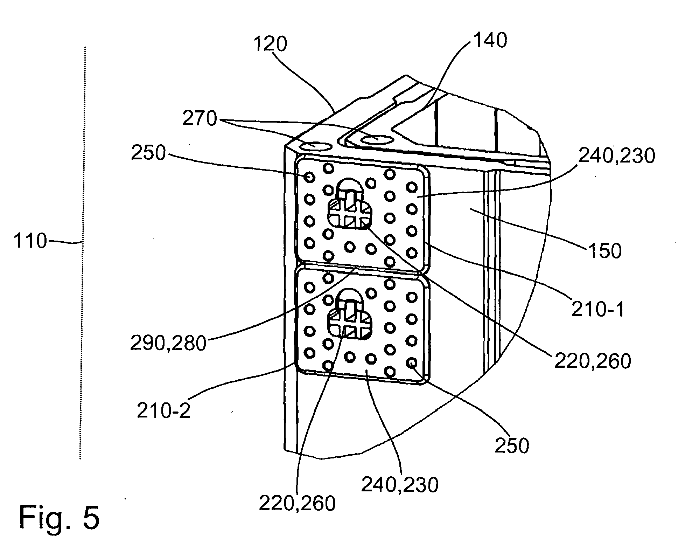

Allerdings weist ein Ausführungsbeispiel einer Hubsäule 100 entsprechend eine erste und eine zweite Ausnehmung 160, 170 auf, die beispielsweise - wie in den Fig. 1 und 2 gezeigt - entlang der Bewegungsrichtung 110 zueinander versetzt in einer entsprechenden Führungsfläche 150 implementiert sein können. In die entsprechenden ersten und zweiten Ausnehmungen 160, 170 kann dann ein entsprechendes Führungsbauteil 210 einsetzbar sein. Die Ausnehmungen 160, 170 sowie die entsprechenden Führungsbauteile 210 sind hierbei derart ausgebildet bzw. angeordnet, sodass die Führungsbauteile in dem eingebauten Zustand miteinander in Kontakt stehen. Ausführungsbeispiele einer Hubsäule 100 können so auf der Verwendung von Doppelgleitern bzw. Doppelgleitpilzen zur Führung von teleskopischen Hubsäulenprofilen basieren, wie dies beispielsweise in Fig. 5 dargestellt ist.

Fig. 5 zeigt eine Fig. 4 vergleichbare Darstellung des ersten Hubsäulenbauteils 120 und des dritten Hubsäulenbauteils 140. Wie bereits im Zusammenhang mit den Fig. 1 und 2 erläutert wurde, weist das erste Hubsäulenbauteil 120 in der Führungsfläche 150 eine erste und eine zweite Ausnehmung 160, 170 (nicht gezeigt in Fig. 5) auf, die derart ausgebildet und angeordnet sind, dass ein erstes und ein zweites Führungsbauteil 210-1, 210-2 in die beiden Ausnehmungen 160, 170 mit ihren entsprechenden Befestigungsstrukturen 220 (ebenfalls nicht gezeigt in Fig. 5) einführbar sind. Die Ausnehmungen 160, 170 und die beiden Führungsbauteile 210 sind hierbei derart ausgebildet, dass diese in dem eingebrachten Zustand miteinander in Kontakt stehen.

Die beiden Führungsbauteile 210-1, 210-2, wie sie in Fig. 5 gezeigt sind, sind identisch ausgebildet bzw. identisch ausgeführt zu dem Führungsbauteil 210, wie es in den Fig. 3 und 4 gezeigt ist. Anders ausgedrückt handelt es sich um gleiche Bauteile. Die Führungsbauteile 210 sind hierbei entlang der Bewegungsrichtung 110 versetzt angeordnet. Sie orientieren sich hierbei entsprechend der im Zusammenhang mit den Fig. 1 und 2 beschriebenen Anordnung der ersten und zweiten Ausnehmungen 160, 170.

Die Führungsabschnitte 230 der beiden Führungsbauteile 210 weisen hierbei parallel zu der Führungsfläche 150 eine im Wesentlichen rechteckige Struktur mit abgerundeten Ecken auf, die der Gleitfläche 240 im Wesentlichen entspricht. Die rechteckige Oberfläche wird hierbei lediglich durch die Schmiermitteltaschen 250 sowie die Verbindungsstruktur 260 bzw. die Befestigungsstruktur 220 unterbrochen.

Die Führungsbauteile 210 stehen daher bei der hier gezeigten Ausführungsform entlang einer gemeinsamen Berührungskante 280 miteinander in Kontakt. Anders ausgedrückt sind die Führungsbauteile 210 derart ausgebildet, dass diese entlang einer mit der Berührungskante 280 zusammenfallenden Linie 290 in Kontakt stehen.

Die Hubsäule 100 gemäß einem Ausführungsbeispiel weist so zwei parallel angeordnete Führungsbauteile 210-1, 210-2 auf, durch die eine Flächenpressung herabgesetzt werden kann. Diese Parallelschaltung der beiden Gleitpilze kann darüber hinaus aufgrund der gemeinsamen Berührungskante 280 bzw. Berührungslinie 290 ein in eines der Führungsbauteile 210 eingeleitetes Drehmoment auf das andere Führungsbauteil 210 übertragen. Entsprechende Drehmomente können beispielsweise aufgrund von an den Gleitflächen 240 auftretenden Reibkräften entstehen. Durch die Übertragung des Drehmoments zwischen den Führungsbauteilen 210 kann es so möglich sein, dieses ohne eine Zerstörung der betreffenden Führungsbauteile in Kauf nehmen zu müssen, zu absorbieren.

Anders ausgedrückt kann durch die in Fig. 5 beispielsweise gezeigte Parallelschaltung der entsprechenden Gleitpilze ihre Zerstörung gegebenenfalls dadurch verändert werden, indem bei der parallelen Anordnung der Führungsbauteile 210 kein bzw. ein geringeres Drehmoment an die Befestigungsstrukturen 220 (Befestigungszapfen) eingeleitet wird. Die zwei Führungsbauteile 210 stützen sich hierbei gegenseitig.

Eine solche Implementierung kann beispielsweise dann sinnvoll sein, wenn die Führungsbauteile 210 bzw. ihre Führungsabschnitte 230 parallel zu der Führungsfläche keinen formschlüssigen Kontakt zu dem ersten Hubsäulenbauteil 120 oder einem anderen Hubsäulenbauteil ausbilden können. Dies kann gegebenenfalls weiter verschärft werden, wenn die Führungsbauteile 210 gegebenenfalls aufgrund ihrer geometrischen Ausgestaltung und Anordnung für entsprechende Drehmomente besonders empfindlich sind. So kann beispielsweise bei der auch in Fig. 5 deutlich erkennbaren, exzentrischen Anordnung der Befestigungsstruktur 220 bzw. der Verbindungsstruktur 260 im Vergleich zu der Gleitfläche 240 schon aufgrund dieser Anordnung leichter ein Drehmoment in die betreffenden Befestigungsstrukturen 220 einleitbar sein. Dies kann ferner dadurch begünstigt werden, dass sich die Führungsabschnitte 230 bzw. die Gleitflächen 240 der Führungsbauteile 210 sich nicht vollständig entlang einer Breite der betreffenden Führungsfläche 150 des betreffenden Hubsäulenbauteils 120 entlang einer senkrecht zu der Bewegungsrichtung 110 stehenden Umfangsrichtung erstrecken. Die Umfangsrichtung verläuft hierbei im Wesentlichen parallel zu der Führungsfläche 150.

Eine solche Ausgestaltung kann gegebenenfalls schon deshalb sinnvoll sein, da gerade bei einer Hubsäule die äußeren Hubsäulenbauteile eine größere Querschnittsfläche aufweisen, als die Inneren. Um trotzdem gleiche Führungsbauteile 210 implementieren zu können, kann es daher gerade bei den größeren Hubsäulenbauteilen passieren, dass diese sich nicht vollständig über die Breite der Führungsflächen 150 erstrecken.

Selbstverständlich können bei anderen Hubsäulen 100 gemäß einem Ausführungsbeispiel auch anders ausgeformte Führungsbauteile 210 verwendet werden. So handelt es sich beispielsweise bei den Schmiermitteltaschen 250 ebenso wie bei der konkreten Ausgestaltung der Befestigungsstruktur 220, der Ausgestaltung der entsprechenden Ausnehmungen 160, 170, 190 und vieler weiterer Aspekte, die im Zusammenhang mit den Fig. 1 bis 5 beschrieben wurden, um optionale Ausgestaltungen. Diese können gegebenenfalls anders ausgeführt werden. So können beispielsweise die Hubsäulenbauteile 120, 130, 140 gegebenenfalls auch einen runden bzw. kreisrunden Querschnitt aufweisen, sodass die entsprechenden Führungsflächen 150, 200 in diesem Fall zylindermantelförmig ausgebildet sein können. Selbstverständlich können auch andere Befestigungstechniken als die im Zusammenhang mit den Fig. 1 bis 5 beschriebenen Steckverbindungen zur Befestigung der Führungsbauteile 210 in den entsprechenden Ausnehmungen 160, 170, 190 zum Einsatz kommen.

Durch den Einsatz der zwei miteinander in Kontakt stehenden Führungsbauteile 210-1, 210-2 kann so mit einfachen konstruktiven Mitteln einerseits eine lineare Führung wenigstens zwei ineinander einschiebbare Hubsäulenbauteile 120, 130 ermöglicht werden, die eine verbesserte Aufnahme von Drehmomenten ermöglichen. Diese können beispielsweise aufgrund mechanischer Verformungen, Reibkräften und anderen Effekten an den entsprechenden Führungsbauteilen 210 auftreten.

Die in der vorstehenden Beschreibung, den Ansprüchen und den Zeichnungen offenbarten Merkmalen können sowohl einzeln als auch in beliebiger Kombination für die Verwirklichung der Erfindung in ihren verschiedenen Ausgestaltungen von Bedeutung sein.

### Bezugszeichenliste

- 100: Hubsäule
- 110: Bewegungsrichtung
- 120: Erstes Hubsäulenbauteil
- 130: Zweites Hubsäulenbauteil
- 140: Drittes Hubsäulenbauteil
- 150: Führungsfläche
- 160: Erste Ausnehmung
- 170: Zweite Ausnehmung
- 180: Bohrung
- 190: Weitere Ausnehmung
- 200: Weitere Führungsfläche
- 210: Führungsbauteil
- 220: Befestigungsstruktur
- 230: Führungsabschnitt
- 240: Gleitfläche
- 250: Schmiermitteltasche
- 260: Verbindungsstruktur
- 270: Bohrung
- 280: Berührungskante
- 290: Linie

## Patentansprüche

1. Hubsäule (100) mit folgenden Merkmalen:
einem ersten (120) und einem zweiten Hubsäulenbauteil (130), die derart ausgebildet sind, dass diese entlang einer Bewegungsrichtung (110) ineinander einschiebbar sind, wobei das erste (120) und das zweite Hubsäulenbauteil (130) jeweils eine, sich entlang der Bewegungsrichtung erstreckende Führungsfläche (150) aufweisen, die in einem eingeschobenen Zustand einander zugewandt sind, wobei das erste Hubsäulenbauteil (120) in der Führungsfläche (150) eine erste (160) und eine zweite Ausnehmung (170) aufweist; und
ein erstes und ein zweites Führungsbauteil (210), die jeweils eine Befestigungsstruktur (220) und einen im Wesentlichen flächig ausgestalteten Führungsabschnitt (230) aufweisen, wobei die Führungsbauteile (210) derart ausgebildet sind, dass die Befestigungsstrukturen (220) in die Ausnehmungen (160, 170) des ersten Hubsäulenbauteils (120) einsetzbar sind, sodass die Führungsabschnitte (230) an der Führungsfläche (150) des zweiten Hubsäulenbauteils (130) anliegen, **dadurch gekennzeichnet dass**
die Führungsbauteile (210) und die Ausnehmungen (160, 170) derart ausgebildet und angeordnet sind, dass die Führungsbauteile (210) miteinander entlang einer Linie (290) in Kontakt stehen, wenn die Befestigungsstrukturen (220) in die Ausnehmungen (160, 170) eingebracht sind.

2. Hubsäule (100) nach Anspruch 1, bei der das erste (120) und das zweite Hubsäulenbauteil (130) derart ausgestaltet sind, dass die Führungsabschnitte (230) der Führungsbauteile (210) parallel zu den Führungsflächen (150) keinen formschlüssigen Kontakt zu dem ersten (120) und/oder dem zweiten Hubsäulenbauteil (130) aufweisen.

3. Hubsäule (100) nach einem der vorhergehenden Ansprüche, bei dem die Führungsflächen (150) des ersten (120) und des zweiten Hubsäulenbauteils (130) in Form eines Ebenenabschnitts und die Führungsabschnitte (230) im Wesentlichen plattenförmig ausgestaltet sind.

4. Hubsäule (100) nach Anspruch 3, bei der die Führungsabschnitte (230) der Führungsbauteile (210) sich höchstens 80 % entlang einer Breite der Führungsfläche (150) des ersten Hubsäulenbauteils (120) entlang einer senkrecht zu der Bewegungsrichtung (110) stehenden Umfangsrichtung des ersten Hubsäulenbauteils (120) erstreckt.

5. Hubsäule (100) nach einem der Ansprüche 3 oder 4, bei der die Befestigungsstruktur (220) zu einem geometrischen Mittelpunkt des Führungsabschnitts (230) versetzt angeordnet ist.

6. Hubsäule (100) nach einem der vorhergehenden Ansprüche, bei der die Befestigungsstrukturen (220) der Führungsbauteile (210) und die Ausnehmungen (160, 170) des ersten Hubsäulenbauteile (120) derart ausgebildet sind, dass die Führungsbauteile (210) durch das Einsetzen der Befestigungsstrukturen (220)in die Ausnehmungen (160, 170) des ersten Hubsäulenbauteils (120) drehfest mit diesem verbunden sind.

7. Hubsäule (100) nach einem der vorhergehenden Ansprüche, bei dem die Führungsbauteile (210) entlang der Bewegungsrichtung (110) zumindest teilweise hintereinander angeordnet sind.

8. Hubsäule (100) nach einem der vorhergehenden Ansprüche, bei der die Führungsbauteile (210) aus einem Polymer, beispielsweise einem spritzgießfähigen Polymer, gefertigt sind, und/oder einstückig ausgeführt sind.

9. Hubsäule (100) nach einem der vorhergehenden Ansprüche, bei der das erste (210) und das zweite Führungsbauteil (210) identisch ausgeführt sind.

## Claims

1. Lifting column (100) having the following features:
a first lifting-column component (120) and a second lifting-column component (130), which are designed such that they can be pushed one inside the other along a movement direction (110), wherein the first lifting-column component (120) and the second lifting-column component (130) each have a guide surface (150), extending along the movement direction and facing towards one another in a pushed-in state, wherein the first lifting-column component (120) has a first aperture (160) and a second aperture (170) in the guide surface (150); and
a first and a second guide component (210), each having a fastening structure (220) and an essentially sheet-like guide portion (230), wherein the guide components (210) are designed such that the fastening structures (220) can be inserted into the apertures (160, 170) of the first lifting-column component (120), and therefore the guide portions (230) butt against the guide surface (150) of the second lifting-column component (130), **characterized in that**
the guide components (210) and the apertures (160, 170) are designed and arranged such that the guide components (210) are in contact with one another along a line (290) when the fastening structures (220) are introduced into the apertures (160, 170).

2. Lifting column (100) according to Claim 1, in which the first lifting-column component (120) and the second lifting-column component (130) are configured such that the guide portions (230) of the guide components (210), parallel to the guide surfaces (150), have no form-fitting contact with the first lifting-column component (120) and/or the second lifting-column component (130).

3. Lifting column (100) according to one of the preceding claims, in which the guide surfaces (150) of the first lifting-column component (120) and of the second lifting-column component (130) are configured in the form of a planar portion and the guide portions (230) are of essentially plate-like configuration.

4. Lifting column (100) according to Claim 3, in which the guide portions (230) of the guide components (210) extend not more than 80% of the way along a width of the guide surface (150) of the first lifting-column component (120) along a circumferential direction of the first lifting-column component (120), said circumferential direction being perpendicular to the movement direction (110).

5. Lifting column (100) according to either of Claims 3 and 4, in which the fastening structure (220) is offset in relation to a geometrical centre point of the guide portion (230).

6. Lifting column (100) according to one of the preceding claims, in which the fastening structures (220) of the guide components (210) and the apertures (160, 170) of the first lifting-column component (120) are designed such that the guide components (210) are connected in a rotationally fixed manner to the first lifting-column component (120) by virtue of the fastening structures (220) being inserted into the apertures (160, 170) of said first lifting-column component.

7. Lifting column (100) according to one of the preceding claims, in which the guide components (210) are arranged one behind the other, at least in part, along the movement direction (110).

8. Lifting column (100) according to one of the preceding claims, in which the guide components (210) are produced from a polymer, for example an injection-mouldable polymer, and/or are made in one piece.

9. Lifting column (100) according to one of the preceding claims, in which the first guide component (210) and the second guide component (210) are identical.

## Revendications

1. Colonne de levage (100), comprenant les caractéristiques suivantes :
un premier (120) et un deuxième (130) composant de colonne de levage, qui sont réalisés de telle sorte qu'ils puissent être enfoncés l'un dans l'autre le long d'une direction de déplacement (110), le premier (120) et le deuxième (130) composant de colonne de levage présentant chacun une surface de guidage (150) s'étendant le long de la direction de déplacement, qui sont tournées l'une vers l'autre dans un état enfoncé, le premier composant de colonne de levage (120) présentant dans la surface de guidage (150) un premier (160) et un deuxième (170) évidement ; et
un premier et un deuxième composant de guidage (210), qui présentent chacun une structure de fixation (220) et une portion de guidage (230) configurée sous forme essentiellement plane, les composants de guidage (210) étant configurés de telle sorte que les structures de fixation (220) puissent être insérées dans les évidements (160, 170) du premier composant de colonne de levage (120), de telle sorte que les portions de guidage (230) s'appliquent contre la surface de guidage (150) du deuxième composant de colonne de levage (130), **caractérisée en ce que**
les composants de guidage (210) et les évidements (160, 170) sont réalisés et disposés de telle sorte que les composants de guidage (210) soient en contact l'un avec l'autre le long d'une ligne (290) lorsque les structures de fixation (220) sont introduites dans les évidements (160, 170).

2. Colonne de levage (100) selon la revendication 1, dans laquelle le premier (120) et le deuxième (130) composant de colonne de levage sont configurés de telle sorte que les portions de guidage (230) des composants de guidage (210) ne présentent, parallèlement aux surfaces de guidage (150), aucun contact par engagement par correspondance de formes avec le premier (120) et/ou le deuxième (130) composant de colonne de levage.

3. Colonne de levage (100) selon l'une quelconque des revendications précédentes, dans laquelle les surfaces de guidage (150) du premier (120) et du deuxième (130) composant de colonne de levage sont configurées sous la forme d'une portion de plan et les portions de guidage (230) sont configurées essentiellement en forme de plaque.

4. Colonne de levage (100) selon la revendication 3, dans laquelle les portions de guidage (230) des composants de guidage (210) s'étendent au maximum sur 80 % le long d'une largeur de la surface de guidage (150) du premier composant de colonne de levage (120) le long d'une direction périphérique du premier composant de colonne de levage (120) perpendiculaire à la direction de déplacement (110).

5. Colonne de levage (100) selon l'une quelconque des revendications 3 ou 4, dans laquelle la structure de fixation (2 20) est disposée de manière décalée par rapport à un centre géométrique de la portion de guidage (230).

6. Colonne de levage (100) selon l'une quelconque des revendications précédentes, dans laquelle les structures de fixation (220) des composants de guidage (210) et les évidements (160, 170) du premier composant de colonne de levage (120) sont réalisés de telle sorte que les composants de guidage (210) soient connectés par l'insertion des structures de fixation (220) dans les évidements (160, 170) du premier composant de colonne de levage (120) de manière solidaire en rotation avec celui-ci.

7. Colonne de levage (100) selon l'une quelconque des revendications précédentes, dans laquelle les composants de guidage (210) sont disposés au moins en partie les uns derrière les autres le long de la direction de déplacement (110).

8. Colonne de levage (100) selon l'une quelconque des revendications précédentes, dans laquelle les composants de guidage (210) sont fabriqués en un polymère, par exemple un polymère pouvant être moulé par injection, et/ou sont réalisés d'une seule pièce.

9. Colonne de levage (100) selon l'une quelconque des revendications précédentes, dans laquelle le premier (210) et le deuxième (210) composant de guidage sont réalisés de manière identique.
